# EUROPEAN PATENT APPLICATION

(11) **EP 1 044 633 A2**
(43) Date of publication of application: **18.10.2000**
(21) Application number: 00201288.8
(22) Date of filing: 10.04.2000
(51) Int. Cl.: A47B 96/20, F16B 12/26

(54) **Pane for filing frame members of furniture, or the like**

(30) Priority: 12.04.1999 IT MI990209 U
(71) Applicant: MDF Srl, 20123 Milano (IT)
(72) Inventor: Fattorini, Bruno, 20123 Milan (IT); Rossato, Marino, 20123 Milan (IT)
(74) Representative: Dragotti, Gianfranco

(57) **Abstract**

A pane for shelves, furniture and the like, to be inserted in frames, in which is self-locking, consisting of a layered structure (10) formed by a first external metal surface (12), by an intermediate layer (14) of plastic material and by a second external metal surface (16), being the intermediate layer (14) provided with a central rib (18), operating as a screen against light filtering and, at a first end of the pane, with cylindrical slots (24) able to house conical pins (26) fastened to an adjacent frame member (20) and, at an opposite end of the pane, the intermediate pane itself (14) is provided with resilient inserts (30), comprising springs (36) and balls (40), snap engaging slots (42) in an adjacent frame member (22).

## Description

The present invention pertains to a pane for filling frame members of furniture, or the like, made in such a way to be hand fastened and removed without the use of any specific tool.

Since long time, panes to be inserted in furniture frames to form their walls are well known. Also it is well known that sometimes it would be useful to have such panes easily fastened and removed without using specific tools, just through simple hand intervention.

The possibility of inserting and removing panes without using tools is offered by a pane, according to the present invention, formed by a layered structure to be inserted in frames and particularly between an upper frame member and a lower frame member, characterized in that the layered structure comprises a first rigid metal surface, a plastic material intermediate layer and a second rigid metal surface, an upper side of the pane being provided with at least two cylindrical slots to be engaged by at least two conical pins fastened to the upper frame member and an opposite lower side of the pane being provided with at least two resilient inserts engaged with a rectangular slot in an upper face of the lower frame member.

In particular, the conical pins, inserted on grub screws, fastened to the upper frame member, have basis diameter equal to the diameter of the cylindrical slots.

More in particular, the resilient inserts are formed by a bushing, having hollow bottom, comprising an internal hole, which contains a spring, and closed by a threaded plug, pushing the spring a ball to come out the pierced bottom of the bushing.

Further, the upper side of the intermediate layer is provided with a central raised rib having the duty of preventing light filtering between the upper frame member and the pane itself.

Also, the lower side of the intermediate layer is provided with a central raised rib having the duty of preventing light filtering between the lower frame member and the pane itself.

In particular, the intermediate layer is made of ethyl vinyl acetate (EVA).

The features of the present invention will be carefully defined in the claims forming the conclusive portion of the description.

However, other features and advantages will clearly result from the present description of an embodiment thereof, not to be anyway considered as limiting, provided with the enclosed drawings, wherein:
- Figure 1 is a partial cross-section view of a pane according to the present invention;
- Figure 2 is a partial top view of the pane itself;
- Figure 3 is a partial bottom view of the pane itself;
- Figure 4 is a partial front view, in cross-section, of the pane shown in the Figure 1 when is mounted on a frame;
- Figure 5 is a partial front view, with partially cut portions, of the pane, shown in the Figure 4, mounted on a frame; and
- Figure 6 is a cross-section view of a pane according to the present invention when is removed from a frame.

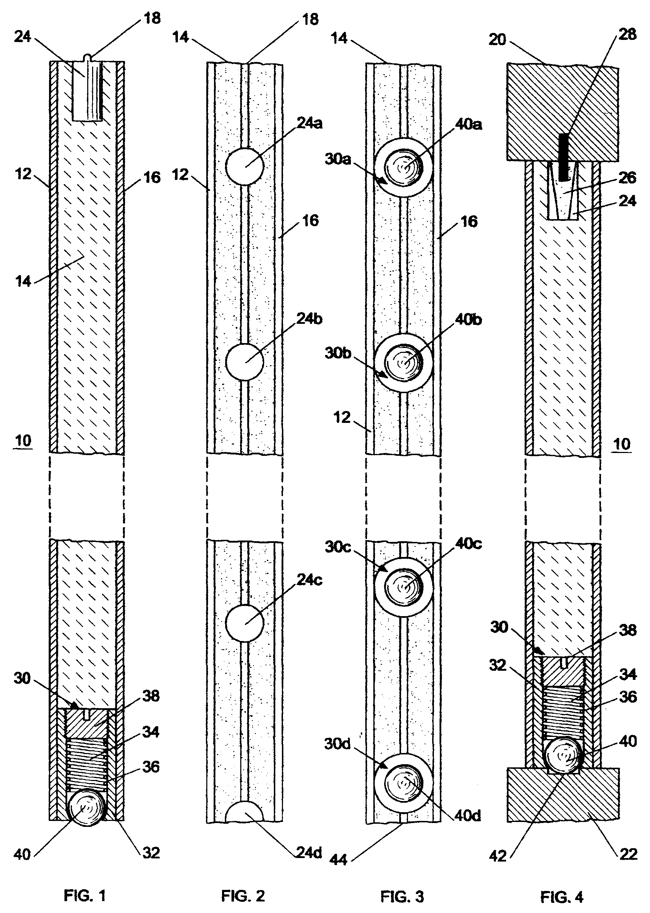

Looking at Figures 1 to 5, it is seen that a pane according to the present invention comprises a layered structure 10 formed by a first external metal surface 12, by an intermediate plastic layer 14 and by a second external metal surface 16. In particular, this layered structure 10 comprises external metal surfaces 12 and 16 of aluminium and an intermediate layer of ethyl vinyl acetate (EVA). The intermediate EVA layer 14 is provided with a raised central rib 18 expected to be strain engaged against frame members, such as the members 20 and 22, to completely stop light filtering at the connection between the frame members 20 and 22 and the pane.

The upper side of the pane has in the EVA layer 14 a multiplicity of cylindrical slots 24, 24a-d suited for housing conical pins 26, 26a, 26b fastened to the frame member 20 by means of, for example, grub screws 28, 28a, 28b screw engaged in corresponding threaded holes in the frame 20.

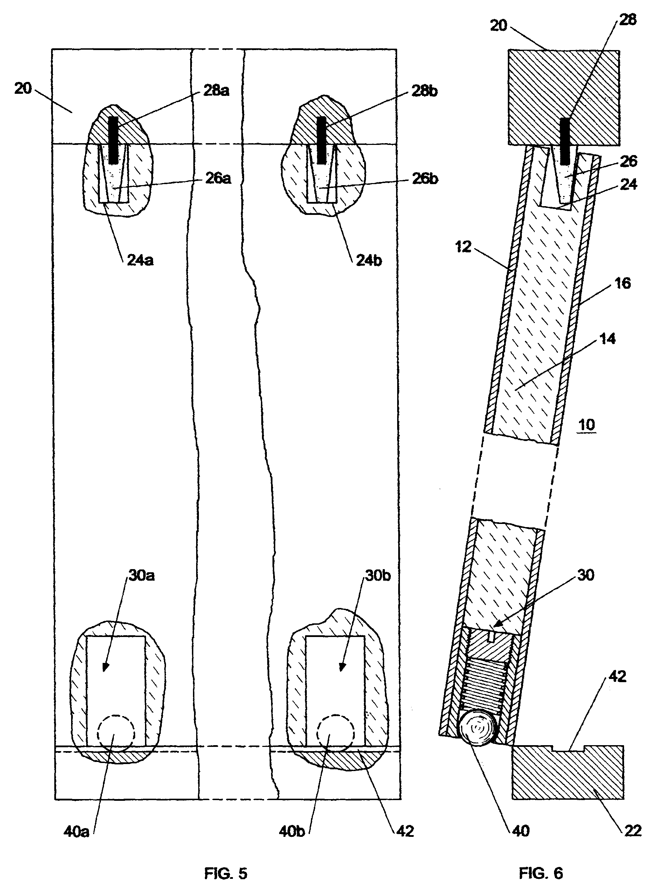

The lower side of the pane has inserted in the EVA layer 14 a plurality of inserts 30, 30a-d longitudinally resilient, comprising a bushing 32, provided with internal slot 34 containing a spring 36 held under pressure by a threaded plug 38 driving a ball 40 to partially come out the pierced bottom of the bushing 32. As particularly visible in figures 4 and 5, the ball 40 engages a slot 42 present in the lower frame member 22, allowing to drive the pane against the upper frame member 20 and assuring a good mechanical fastening of the pane in the frame. Also the lower side of the pane can have in the EVA layer 14 a raised rib 44 also serving to prevent light filtering between the pane and the lower frame member 22.

Looking at Figure 5, it is realized that the minimal number of slots 24, pins 26 and inserts 30 must be two to avoid undue rotations of the pane with respect to the frame members 20 and 22.

Considering subsequently Figure 4 and Figure 6, it is seen how a pane can be removed from the frame or, vice versa, considering subsequently Figure 6 and then Figure 4, it is seen how a pane can be inserted in the frame. Should a pane have to be removed from the frame, it would be sufficient to push it in horizontal direction at the lower side where the inserts 30 are installed. The push abuts the ball 40 against one of the sides of the slot 42 which, as a consequence, comes in the insert 30, overcoming the force of the spring 36, the coming in of the ball 40 allows the lower side of the pane to slide, crossing the lower frame member 22 to be completely disengaged therefrom. The cylindrical slot 24 manages to be inclined till a side thereof gets in touch with the inclined side of the conical pin 26. At this point however, the bottom of the pane is completely disengaged from the lower frame member 22, so that it is possible to take the pane off the frame, by simply downwards moving it.

The reverse process for inserting a pane in the frame is understood looking in succession the figures 6 and 4. Should a pane to be inserted in the frame, it would have to upwards move the pane till the conical pin 26 (Figure 6) is inserted in the cylindrical slot 24. Subsequently, the bottom of the pane should approach the lower frame member 22, till the contact of the ball 40 with said frame member 22 compel it to come in. By continuing to move the pane to insert it in the frame, it would happen that the ball 40 come into the slot 42, by engaging, under the drive of the spring 36, the bottom of the slot 42 itself, so stopping the pane in the frame, because the lower side of the pane should be fastened by the drive of the balls 40 against the bottom of the slot 42 and the upper side of the pane could be fastened by the fit of the cylindrical slots 24 with the conical pins 26 having bases just as large as the cylindrical slots, so preventing any lateral movement of the pane with respect to the frame.

What has been here above disclosed is just an embodiment of the present invention, not to be considered as limiting the scope of the invention, so that logical and equivalent changings devised by those skilled in this art by reading the above description, should have to be comprised in the covering scope thereof as defined by the following claims

## Claims

1. Pane formed by a layered structure (10) to be inserted in frames and in particular between an upper member (20) of a frame and a lower member (22) of the same frame; characterized in that the layered structure (10) comprises a first rigid metal surface (12), an intermediate layer (14) of plastic material and a second rigid metal surface (16), an upper side of the pane being provided with at least two cylindrical slots (24) to be engaged in at least two conical pins (26) fastened to the upper frame member (20) and an opposite lower side of the pane being provided with at least two resilient inserts (30) to be engaged in a slot (42), having rectangular shape, present on an upper face of the lower frame member (22).

2. Layered structure pane, as in claim 1, characterized in that the conical pins (26) inserted on grub screws (28) fastened to the upper frame (20) have basis diameter equal to the diameter of the cylindrical slots (24).

3. Layered structure pane, as in claim 2, characterized in that the resilient inserts (30) are formed by a bushing (32), having pierced bottom, comprising an internal slot (34) containing a spring (36) and close by a threaded plug (38), the spring (36) driving a ball (40) to come partially out the pierced bottom of the bushing (32).

4. Layered structure pane, as in claim 2, characterized in that the upper side of the intermediate layer (14) is provided with a central raised rib (18) having the duty to prevent any light filtering between the upper frame member (20) and the pane itself.

5. Layered structure pane, as in claim 3, characterized in that the lower side of the intermediate layer (14) is provided with a central raised rib (44) having the duty to prevent any light filtering between the lower frame member (22) and the pane itself.

6. Layered structure pane, as in preceding claims, characterized in that the intermediate layer (14) is made of ethyl vinyl acetate (EVA).
